# EUROPEAN PATENT APPLICATION

(11) **EP 1 329 716 A1**
(43) Date of publication of application: **23.07.2003**
(21) Application number: 02000952.8
(22) Date of filing: 16.01.2002
(51) Int. Cl.: G01N 33/49, G01N 21/65

(54) **Method for screening biological samples for presence of the metabolic syndrome**

(71) Applicant: Roche Diagnostics GmbH, 68305 Mannheim (DE); F. HOFFMANN-LA ROCHE AG, 4070 Basel (CH)
(72) Inventor: Jacob, Stephan, Dr., 78048 Villingen-Schwenningen (DE); Früh, Johanna, Dr., 67117 Limburgerhof (DE); Mischler, Reinhold, 67063 Ludwigshafen (DE); Werner, Gerhard, Dr., 69469 Weinheim (DE); Petrich, Wolfgang, Dr., 76669 Bad Schönborn (DE)
(74) Representative: Jung, Michael, Dr.

(57) **Abstract**

Method for screening biological samples for the presence of the metabolic syndrome in the sample donors, comprising the steps of
a) irradiating the sample by radiation
b) capturing radiation which has interacted with the sample
c) evaluating said captured radiation for spectral characteristics
d) classifying said sample according to the presence of the metabolic syndrome based on its spectral characteristics.

The invention further concerns a system for conducting the screening method.

## Description

The present invention concerns the detection of the metabolic syndrome in patients. Recent reserach indicates that persons suffering from the metabolic syndrome are more likely to acquire diabetes mellitus type 2, which is a severe and even life-threatening disorder of the glucose metabolism. More precisely, there are two types of diabetes mellitus and, although both types of diabetics suffer from an impaired glucose metabolism and might experience similar symptoms, they vastly differ with respect to their origin and probably with regard to their impact onto the general metabolism. While type-1 diabetes is an autoimmune disorder with a rapid loss of β-cell function, which finally leads to absolute insulin deficiency, type-2 diabetes is characterized by insulin resistance and/or a hampered glucose transport and - at least in early stages - hyperinsulinemia; this disease is often associated with additional metabolic disorders such as dyslipidemia and hyperuricemia.

It has been shown that an early diagnosis and treatment of diabetes significantly reduces the long-term complications, such as retinopathy or angiopathy. Hence, there is a clinical need for an early detection of the onset of diabetes mellitus.

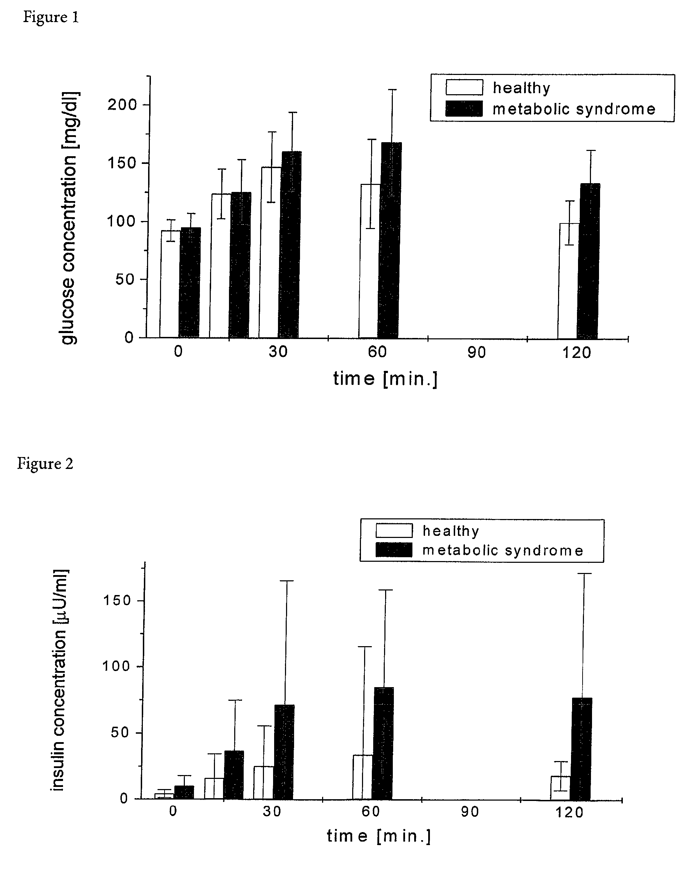

The vast majority of all diabetes mellitus patients suffer from the type-2 diabetes and studies have indicated that the vicious circle of insulin resistance and hyperinsulinemia precedes the manifestation of type-2 diabetes by decades. In this hyperinsulinemic non-diabetic phase, the subjects usually have "mild" hypertension, some dyslipidemia (elevation of triglycerides, higher LDL-but lower HDL-cholesterol) and some degree of overweight. This cluster of risk factors is described as the "metabolic syndrome" or the "insulin resistance syndrome". These atherogenic risk factors accelerate arteriosclerosis and thus the development of macroangiopathy. The vicious circle of insulin resistance and hyperinsulinemia is considered to precede the manifestation of diabetes type-2 by decades and the corresponding cluster of risk factors is described as the "insulin resistance syndrome" or "metabolic syndrome".
Prior to the manifestation of diabetes type-2 an oral glucose tolerance test (oGTT) may still reveal glucose levels in the normal range since an insulin resistance can be compensated by hyperinsulinemia for a long time. However - *if measured -* insulin levels during the oral glucose load are markedly higher. When insulin sensitivity is quantified with the gold standard (i.e. the euglycemic-hyperinsulinemic glucose clamp) insulin sensitivity is strongly reduced in these subjects. According to this screening for the metabolic syndrome is made by an oral glucose tolerance test in which the patient has to consume a glucose drink. Blood glucose concentration and blood insulin concentration are then repeatedly measured over e.g. 120 minutes. In Figure 1 the glucose concentrations found in healthy volunteers is compared to those glucose concentrations found in metabolic syndrome patients. Figure 2 shows the corresponding concentrations of the insulin concentration. While slight differences in the mean values of the glucose concentrations can be observed 30, 60 and 120 min. after the start of the oGTT (Fig. 1), the glucose measurement alone does not allow for sufficient discrimination between the patients suffering from the metabolic syndrome and the healthy volunteers. This finding is in agreement with the above explanation that the insulin resistance might be compensated by strongly elevated levels of insulin. Indeed, the insulin concentrations of the patients suffering from the metabolic syndrome are - on average - much higher than those insulin levels measured in the healthy volunteers' samples (Fig. 2). Finally, the joint observation of both, the glucose and the insulin concentration, over the course of 2 hours enables a definitive distinction between "healthy" and "metabolic syndrome".
The measurement of the glucose concentration alone is not sufficient to detect the metabolic syndrome but corresponding measurements of the insulin concentration are necessary to achieve clinically relevant findings. This screening for the metabolic syndrome therefore is a very time consuming and complicated task since it requires repeated measurement of two analytes over a significant time period. In day-to-day clinical practice the oGTT with simultaneous determination of insulin levels is hardly feasible. Hence, there is a need for a simple and inexpensive test to screen subjects at risk for the metabolic syndrome.

This invention solves these problems by providing a simple, quick and cheap process to screen for the metabolic syndrome.

According to the present invention a screening of biological samples for the presence of the metabolic syndrome is made by performing the following steps:
A sample is irradiated and that part of the radiation which has interacted with the sample is being captured. The captured radiation is spectrally resolved and evaluated for spectral characteristics. The sample is being classified according to the presence of the metabolic syndrome based on its spectral characteristics.

This invention further proposes a system for screening biological samples having a radiation source for irradiating a sample, a detector for capturing radiation which has interacted with the sample to detect for spectral characteristics as well as a classification unit for classifying the sample according to the presence of the metabolic syndrome based on its spectral characteristics.

The aim of the present invention is to supply a simple diagnostic tool for detecting the metabolic syndrome based on a single blood draw of blood or other biological samples only. This novel tool is particularly useful in a screening application. It is likely that the identification of those people who are diagnosed with the metabolic syndrome and who are at higher risk to develop diabetes type 2 allows for an appropriate, early therapy. In this way the outbreak of diabetes may be delayed or potentially even avoided. by an early change of the eating habits, by practicing sports and/or by medication. The value of life is therefore enhanced by the detection of the metabolic syndrome and significant costs to the health insurance system can be avoided.

According to the present invention a biological sample is analyzed by radiation to detect molecular vibrations which are related to the metabolic syndrome. Suitable biological samples which can be used for a screening process are blood, serum, interstitial fluid as well as other body fluids and, possibly, tissue samples.

Two different types of techniques are most frequently used for viewing the fundamental modes of molecular vibrations, namely mid-infrared spectroscopy and Raman spectroscopy. The first method uses infrared photons of appropriate wavelengths (2.5 to 25 µm) directly and measures the change in the electric dipole moment of the molecule. The second method illuminates the sample with light of approx. 1/10 that wavelengths and measures that fraction of scattered light in which the energy of the photon has changed. The energy difference between the incoming photon and the outgoing photon is deposited in (or taken from) the vibrational energy of the molecule. The underlying mechanism of Raman scattering is the change in electronic polarizability.

When applying Raman or mid-infrared spectroscopy to biomedical samples such as tissue or body fluids one of the major obstacles is enforced by the fact that most biomaterials have a large water content.

In terms of spectroscopy, one of the properties of water is that its absorption of electromagnetic radiation is maximum in the mid-infrared region. For instance, more than 99.99 % of the radiation of 10 µm wavelength is absorbed in a 0.1 mm thick layer of water. Thus direct mid-infrared spectroscopy is strongly hampered by water absorption.

Raman spectroscopy strongly reduces the problem of water absorption by using visible or near-infrared light. For instance, less than 0.01% of the radiation of the wavelength equal to 1 µm is absorbed in a 0.1 mm thick layer of water. However, the actual Raman effect itself is usually very weak, typically 6 orders of magnitude smaller than e.g. fluorescence.

Given the large absorption coefficient of water in the mid-infrared on the one hand and the small Raman scattering efficiency on the other hand, the study of the vibrational spectra of biomolecules has been viewed as a field of biochemical research rather than of medical application. However, with the technical advances of the last two decades the application of vibrational spectroscopy has become an emerging, rapidly growing field of possible application. A recent review is given e.g. by W. Petrich, "Mid-infrared and Raman spectroscopy for medical diagnostics", *Appl. Spectrosc. Rev.* 36, pp. 181-237, 2001.

The sample as such can be irradiated or the sample can be modified previously. Such modifications e.g. are the removal of blood cells from a blood sample or even interaction of the sample with reagents. It is, however, a significant advantage of the present invention that it can be practiced without any reagents interacting chemically or biologically with the sample. Since a. m. biological samples comprise significant amounts of water - which has strong absorption bands the infrared range - it is advantageous to remove such water at least partially in the case of infrared spectroscopy. In this way the diagnostically relevant absorption bands are less disturbed by the strong water bands. A process suitable for drying the sample is described in US patent 5,605,838. Should the drying step need to be avoided, an attenuated total reflection (ATR) method can be advantageous in the case of infrared spectroscopy. In case of Raman spectroscopy, the drying step is not necessary since the visible or near infrared light used in this technology easily penetrates water.

The sample prior to irradiation may be placed onto a carrier. A carrier suitable for analysis in the reflective mode is e.g. described in US 5,869,001. One example of a well suited carrier has a body with depressions into which small amounts of sample can be applied. The carrier surface on which the sample rests should be either predominantly reflective or predominantly transmissive in the wavelength spectrum which is used. Reflective carriers can be provided by a metalized microscopic slide. Preferred reflective carriers have a reflecting surface of a roughness which provokes a diffuse scattering of the used radiation. The surface roughness may be chosen as less than 200 µm, preferably between 0.5 to 50 µm. Metals which are useful for providing the carrier itself or for coating a support structure of different nature (e. g. plastics) are gold and palladium as well as aluminum and chromium. The materials used for the carrier surface or its metalization should be mostly inert with respect to both sample and ambient conditions. It has proven useful to employ carriers having a recess (depression) to receive sample liquid so that the sample liquid is concentrated in a specific region of the carrier and does not spread out uncontrolled. By using such carriers the sample further can be located by an automatic apparatus due to its specific location with respect to the carrier edges.

Alternatively to reflective carriers, carriers are possible for transmittance measurements which allow incident radiation to pass through. Again these carriers can be made with a smooth or (should a diffusely transmitted radiation be desired) with a rough surface. These carriers can be made e.g. of plastics such as polycarbonate, polyethylene or polymethylmethacrylate which allow the transmission of infrared radiation within wide wave number ranges. The carriers for transmittance measurements can also have depressions to hold the sample liquids. Furthermore carriers for transmittance measurements are useful which have one or several openings into which the sample liquid can be placed. Suitable embodiments of such carriers have e.g. openings in the form of bores, nets or perforated foils. When the sample is applied to the carrier the liquid spreads out and fills these openings. When sample liquid is dried a hanging film is formed in the openings. If the openings are large enough with respect to the cone of radiation it may be possible to record spectra without interference of other materials. However, absorption may also be recorded with carrier material within the radiation cone. With respect to suitable carriers reference is hereby made to US patent 5,734,587.

It was already mentioned that it is advantageous to dry the sample at least partially prior to spectral evaluation. A sample can be dried passively by evaporation of a solvent into the surrounding atmosphere or drying can be made in a controlled way by special devices. Drying can e.g. be achieved by blowing air, heating, applying a vacuum or microwave radiation. It has proven useful not to dry the sample completely but only partially. A residual content of solvent (water) of 1 % to 20 % has turned out to be advantageous since a reproducible drying residue is being formed. When a sample is dried completely normally amorphous powders are formed which interfere with a reproducible spectroscopic examination. With respect to the drying process reference is hereby made to US patent 5,869,001.

According to the present invention the sample (preconditioned or not) is irradiated by radiation. It has been found that suitable radiation for the screening process are within the region of 2.5 to 25 micrometers for infrared spectroscopy and between 0.4 and 1.5 micrometer for Raman spectroscopy. Irradiation can be made by sources with a continuous spectrum as well known in the art. However, according to the findings of this invention certain regions of the spectrum are of particular importance and the method may be restricted to irradiation and evaluation within these regions only. It is therefore also suitable to use radiation sources which provide radiation in these ranges only.

Radiation which has interacted with the sample is captured spectrally resolved by known detectors. The spectral resolution can be made on the side of illumination or on side of the detection as known in the field of spectroscopy. For performing the present invention it is suitable to use a standard infrared spectrometer as e.g. the Bruker Vector 22 spectrometer or a Kaiser Optical Systems HoloLab5000R Raman spectrometer.

Alternatively to absorption measurements this invention can be practiced by use of Raman Spectroscopy which yields spectral information of the sample as well.

It has been found that spectral information from the sample in the following regions of vibrational frequencies is suitable to screen for the presence of the metabolic syndrome:
- Region I:: 1000- 1300 wave numbers
- Region II:: 1500- 1800 wave numbers
- Region III:: 2300 - 3200 wave numbers

In the case of infrared spectroscopy the wavenumber ranges correspond to the wavenumber ranges of the detected light and/or of the incident light. In the case of Raman spectroscopy, these wavenumber ranges correspond to the differences between the incoming and the detected light.

The spectrum of the sample is then evaluated for the presence of spectral characteristics. This evaluation means recording of absorption in suitable wavelength regions or the detection of absorption peaks or other significant pattern of the spectrum. These spectral characteristics, be it absorption values in certain regions, absorption peaks or other significant pattern, are then used for classification of the sample. Classification may rely on a reference database.

The reference data base typically contains one or more spectra for normal (healthy) samples and / or samples which show the metabolic syndrome. Alternatively or additionally the data base may contain information about standard absorptions in certain wavelength regions. The comparison of the actual spectrum from a sample to be classified with information from the reference data base may include the steps as subtraction of spectra, normalization of spectra, shifting of spectra according to wavelength and so on. The results can be normalized difference spectra showing similarities and differences between the actual spectrum to be classified and spectra of healthy and / or spectra relating to the metabolic syndrome. It may even be possible that the comparing step only involves the subtraction of an absorption value of the unknown sample at a specific wavelength from absorption values representing healthy and / or diseased samples. As will be shown later with reference to difference spectra showing differences between healthy samples and samples classified as metabolic syndrome, the spectral differences at most wavelengths are fairly small. There are, however, regions which show differences which may be used to classify a sample according to the presence of the metabolic syndrome. It has shown that it is advantageous to use a more advanced classification scheme for classifying a particular sample based on this spectral characteristics. Such a classification can be performed by a microprocessor based unit according to a multicomponent analysis taking into account information from a plurality of wavelengths or wavelength regions. Methods for carrying out a multicomponent analysis are e.g. partial least squares (PLS), principal component regression (PCR) and neuronal nets (NN). It has proven as particular useful to employ a multivariate evaluation procedure for classification of the samples. Such multivariate evaluation procedures are discriminant analysis, neuronal networks or cluster analysis. These analysis methods are commercially available software packages which can be obtained from the companies STSC, STAT SOFT, SAS and Galactic Industries. It has to be understood that above described classification does not necessarily involve the explicit use of a reference spectra database. However, during training of the classification schemes spectral data from already classified samples are involved. The training of such algorithms to match their classification with the classification of reliable clinical findings is - at least generally - known in the art.

It is further useful to employ a genetic algorithm for selecting regions from the spectrum in which indications for the presence of the metabolic syndrome can be found. This approach is named "near optimal region selection" and has been published in "NMR in Biomedicine", Vol. 11, issue 4-5, 1998; pages 209 - 216. The near optimal region selection can be applied prior to using a method for classifying the selected regions according to the presence of the metabolic syndrome. The space to be classified therefore can be reduced drastically which saves time and hardware resources. Furthermore restriction of an analysis to the selected regions of interest excludes other regions from disturbing the evaluation due to effects unrelated to the metabolic syndrome. The application of chemometric evaluation procedures, in particular multivariate evaluation procedures to the analysis of spectra is e.g. described in US patent 5,734,587.

It has to be understood that the above described evaluation procedures including region selection are performed for training a classification unit by using samples of known classification. In the examples it is described how such a training process can be performed. After a suitable classification scheme has been developed a classification unit for classifying samples of unknown classification is then programmed accordingly. The classification unit normally comprises a microprocessor as well as a program storage section for storing a program that performs the classification based on the spectral characteristics of a particular sample. The program for performing the classification may employ the multi-component analysis procedures as described above. However, once the parameters for classification have been set during training of the classification unit with samples of known classification the multi-component analysis can be very quick because in many cases it is reduced to a linear combination of spectral information from particular wavelengths.
- Fig.1:: Mean values of the glucose concentration during an oGTT. The error bars denote the standard deviations.
- Fig.2:: Mean values of the insulin concentration during an oGTT. The error bars denote the standard deviations.
- Fig. 3:: Absorbance of a healthy distribution and one showing the metabolic syndrome as well the difference of both distributions.
- Fig. 4:: Ratio of the squared difference between the mean absorbance values and the squared sum of standard deviations of the two distributions in figure 3 (Fischer criterion)
- Fig.5:: Results of the t-test: the t-value (left) and the significance of this value (right) is plotted as a function of the wave number.
- Fig.6:: Distribution of DPR-scores within the teaching set
- Fig.7:: Distribution of DPR-scores for the independent validation set.

The method for screening biological samples for the presence of the metabolic syndrome is now further clarified by a specific example:

We performed a clinical study on 129 healthy volunteers and 99 patients suffering from the metabolic syndrome. For each patient, an aliquot of sample was taken off the first sample of the oGTT (t=0 min.). 1µl of each person's serum was pipetted onto a test carrier and, after drying, mid-infrared spectra were recorded using a BRUKER Vector 22 spectrometer as described in US 5,734,587.We followed our standard spectroscopic procedure which is described in more detail e.g. in W. Petrich, B. Dolenko, J. Früh, M. Ganz, H. Greger, S. Jacob, F. Keller, A.E. Nikulin, M. Otto, O. Quarder, R.L. Somorjai, A. Staib, G. Werner, H. Wielinger, "Disease pattern recognition in infrared spectra of human sera with diabetes mellitus as an example", *Appl. Opt*. **39**, pp. 3372-3379, 2000.

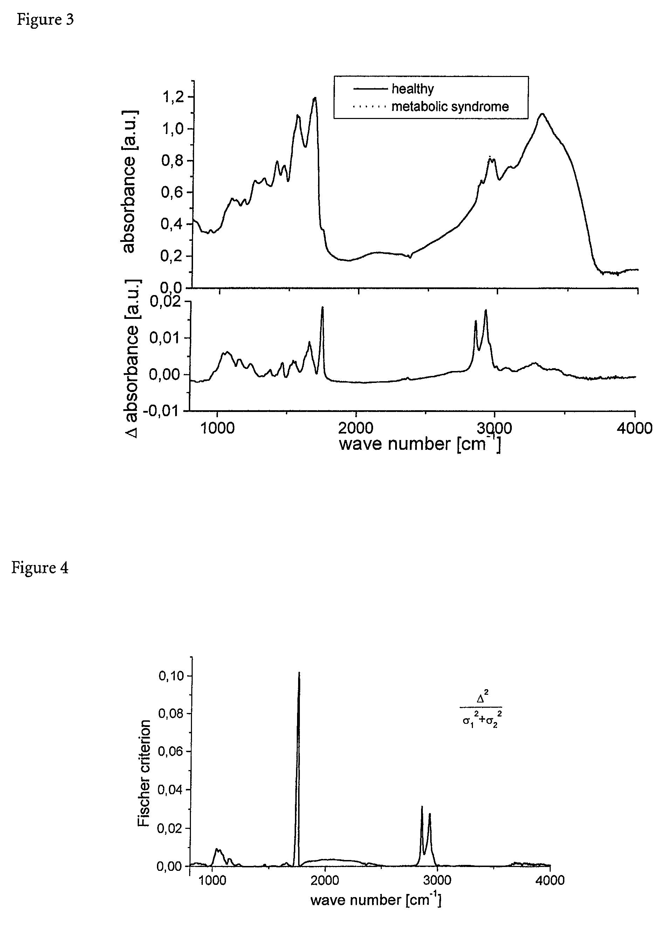

The mean spectra of those samples originating from the healthy volunteers and of those samples originating from patients with the metabolic syndrome are shown in Fig. 3 together with the (small) difference between the mean values. Mean values (top) of the mid-IR spectra of healthy volunteers (solid line) and patients suffering from the metabolic syndrome (dashed line) are shown. The differences between these mean values are approximately two orders of magnitude smaller than the actual absorbance values.

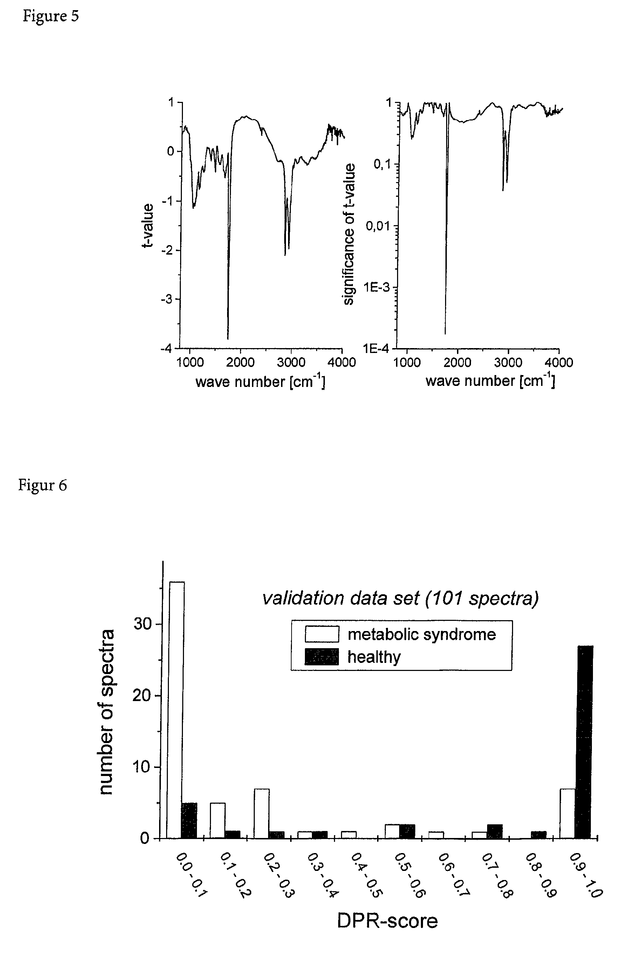

In order to determine whether this difference is significant various statistical tests can be performed. An obvious method is to compare the spectral differences between the (squared) mean values with the (squared sum of) the standard deviations of the individual distribution function at each wave number. Fig.4 shows the result of this so-called Fischer criterion. Although the Fischer criterion easily visualizes the importance of differences it, however, lacks any information about the statistical significance of differences. In contrast, the so called t-test as shown in figure 5 takes into account the number of samples and allows for calculating the significance of a spectral difference.

From the t-test as well as further significance tests such a the Kolmogorv-Smirnov test we conclude that there are significant differences between the spectra originating from healthy volunteers and those originating from patients diagnosed with the metabolic syndrome. Hence, a classification between the two groups of spectra with regards to the donors' disease states appears feasible.

For classification we have partitioned the data set into a teaching and a validation set. The teaching (validation) set comprised serum samples from 90 (40) healthy volunteers and 38 (61) patients with the metabolic syndrome. When including multiple measurement of some patients' samples a total of 271 spectra was measured. (Note that 26 samples of the "metabolic syndrome" teaching set were measured in triplicates for technical reasons and each of these spectra was treated individually. Of course, none of these spectra was used in the validation set.) Subsequently, spectral regions of optimal discriminatory power were selected within the teaching set based on the spectral differences and by using a genetic algorithm as described in: A.E. Nikulin, B. Dolenko, T. Bezabeh, R.L. Somorjai, "Near-optimal region selection for feature space reduction: novel preprocessing methods for classifying MR spectra", *NMR Biomed.* 11, pp. 209-216, 1998.
A linear discriminant analysis was then applied to the teaching set. A likely-hood of belonging to class "healthy" or to class "metabolic syndrome" could be assigned to each spectrum based on the value of the obtained discriminant function. We named this likely-hood the "DPR-score" with values ranging from 0 ("metabolic syndrome") to 1 ("healthy"). Fig. 6 shows the distribution of DPR-score within the teaching set.

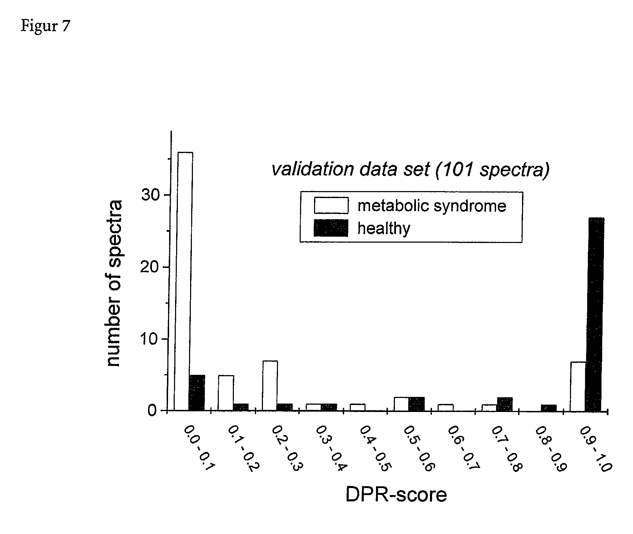

The obtained discriminant function is then applied to the independent validation set and the corresponding DPR-scores were calculated (see Fig.7).

A classification accuracy can be given if all samples with a DPR-score of 0.5 and above are assigned to class "healthy", while samples with DPR-scores below 0.5 are attributed to the class "metabolic syndrome". Given this threshold value of 0.5 for the discrimination between "healthy" and "metabolic syndrome" a sensitivity and specificity of 84 % and 81 % is obtained, respectively, within the teaching set. For the independent validation set, the sensitivity amounts to 80 % and the specificity equals to 82 %.

## Claims

1. Method for screening biological samples for the presence of the metabolic syndrome in the sample donors, comprising the steps of
a) irradiating the sample by radiation
b) capturing radiation which has interacted with the sample
c) evaluating said captured radiation for spectral characteristics
d) classifying said sample according to the presence of the metabolic syndrome based on its spectral characteristics.

2. Method according to claim 1, wherein said radiation is infrared radiation in the wavelength range of 2.5 to 25 micrometer.

3. Method according to claim 1, wherein said radiation is visible or near infrared radiation in the wavelength range of 0.4 to 1.5 micrometer and the type of interaction is Raman scattering.

4. Method according to claim 1 or 2 or 3, wherein said sample is blood or a blood derivative as plasma or serum.

5. Method according to claim 1, wherein said sample is applied to a sample carrier prior to irradiation.

6. Method according to one of the preceding claims, wherein said sample is dried prior to step a).

7. Method according to claim 1, wherein said captured radiation is reflected or transmitted infrared radiation or Raman scattered radiation.

8. Method according to claim 5, wherein said carrier has a reflective surface.

9. Method according to claim 5, wherein said carrier has an infrared-transmissive plastic foil.

10. Method according to claim 1, comprising the following training steps for said classification,
• performing steps a) and b) with samples of known classification, and
• training an evaluation program so that it assigns the samples to the known classifications.

11. Method according to claim 10, wherein a reference database is generated from said samples of known classification.

12. Method according to claim 10, wherein parameters of a an evaluation function are set during said training.

13. Method according to claim 1 or 12, wherein said classification involves the application of an evaluation function with predetermined parameters to the spectral characteristics of the biological sample of unknown classification.

14. Method according to claim 1 or 10, wherein said classification comprises a multivariate evaluation.

15. Method according to claim 1, wherein said evaluation uses spectral information from molecular vibration frequencies of the sample corresponding to a region of 1500 to 1800 wavenumbers (region II).

16. Method according to claim 1, wherein said evaluation uses spectral information from molecular vibration frequencies of the sample corresponding to a region of 2300 to 3200 wavenumbers (region III).

17. Method according to claim 1, wherein said evaluation uses spectral information from molecular vibration frequencies of the sample corresponding to a region of 1000 to 1300 wavenumbers (region I).

18. Method according to the claims 15 to 17, wherein the evaluation uses spectral information from molecular vibration frequencies of the following combinations:
- vibration in region II and III
- vibration in region I and III
- vibration in region I and II
- vibration in region I, II and III.

19. System for screening biological samples for the presence of the metabolic syndrome in sample donors, comprising
a) a radiation source for irradiating the sample
b) a detector for capturing radiation which has interacted with the sample
c) an evaluation unit for evaluating said captured radiation for spectral characteristics
d) a classification unit for classifying said sample according to the presence of the metabolic syndrome based on said spectral characteristics.

20. System according to claim 19, wherein said system comprises a sample carrier onto which sample is applied prior to irradiation.

21. System according to claim 20 wherein said carrier has a diffusely reflective surface.

22. System according to claim 19, wherein said radiation source and said detector are arranged to perform infrared absorption measurement or Raman scattering measurement.

23. System according to claim 19 wherein said classification unit comprises a microprocessor and a program unit being programmed to perform a classification.

24. System according to claim 23, wherein said program unit being programmed with a multivariate evaluation based on parameters determined on samples of known classification.

25. System according to claim 19, wherein said evaluation unit uses spectral information from molecular vibration frequencies of the sample corresponding to the regions given in one of the claims 15, 16 or 17 or uses spectral information from the frequency region combinations of claim 18.
